# EUROPÄISCHE PATENTSCHRIFT

(11) **EP 2 616 324 B1**
(45) Veröffentlichungstag und Bekanntmachung des Hinweises auf die Patenterteilung: **14.11.2018**
(21) Anmeldenummer: 11755340.4
(22) Anmeldetag: 12.09.2011
(51) Int. Cl.: B63H 9/02, B63H 13/00

(54) **SCHIFF, INSBESONDERE FRACHTSCHIFF, MIT EINEM MAGNUS-ROTOR**
SHIP, IN PARTICULAR FREIGHT SHIP, WITH A MAGNUS ROTOR
NAVIRE, NOTAMMENT NAVIRE DE CHARGE, ÉQUIPÉ D'UN ROTOR À EFFET MAGNUS

(30) Priorität: 16.09.2010 DE 102010040920
(43) Veröffentlichungstag der Anmeldung: 24.07.2013
(73) Patentinhaber: Wobben Properties GmbH, 26607 Aurich (DE)
(72) Erfinder: ROHDEN, Rolf, Aurich 26607 (DE)
(74) Vertreter: Eisenführ Speiser
(86) Internationale Anmeldenummer: PCT/EP2011/065730
(87) Internationale Veröffentlichungsnummer: WO 2012/034968

(56) Entgegenhaltungen:
- DE-A1- 19 952 460
- DE-A1-102005 028 447
- GB-A- 2 403 461

## Beschreibung

Die vorliegende Erfindung betrifft ein Schiff, insbesondere ein Frachtschiff, mit einem Magnus-Rotor.

Magnus-Rotoren werden auch als Flettner-Rotoren oder Segel-Rotoren bezeichnet.

Der Magnus-Effekt beschreibt ein Auftreten einer Querkraft, d. h. senkrecht zur Achse und zur Anströmrichtung, bei einem Zylinder, der um seine Achse rotiert und der senkrecht zur Achse angeströmt wird. Die Strömung um den rotierenden Zylinder lässt sich als eine Überlagerung einer homogenen Strömung und eines Wirbels um den Körper auffassen. Durch die ungleichmäßige Verteilung der Gesamtströmung ergibt sich eine unsymmetrische Druckverteilung am Zylinderumfang. Ein Schiff wird somit mit rotierenden bzw. drehenden Rotoren versehen, welche in der Windströmung eine zur wirksamen, d. h. mit der Höchstgeschwindigkeit korrigierten Windrichtung, senkrechte Kraft erzeugen, welche ähnlich wie beim Segeln zum Vortrieb des Schiffes verwendet werden kann. Die senkrecht stehenden Zylinder rotieren um ihre Achse und von der Seite anströmende Luft fließt dann aufgrund der Oberflächenreibung bevorzugt in Drehrichtung um den Zylinder. Auf der Vorderseite ist deshalb die Strömungsgeschwindigkeit größer und der statische Druck geringer, so dass das Schiff eine Kraft in Vorwärtsrichtung erhält.

Ein derartiges Schiff ist bereits aus "Die Segelmaschine" von Claus Dieter Wagner, Ernst Kabel Verlag GmbH, Hamburg, 1991, S. 156 bekannt. Hier wurde untersucht, ob ein Magnus-Rotor, auch Flettner-Rotor genannt, als Antrieb bzw. Hilfsantrieb für ein Frachtschiff eingesetzt werden kann.

Aus der US 4,602,584 ist ein Antriebssystem für ein Schiff bekannt, das eine konventionelle Schrauben- und Ruderanordnung mit einem oder mehreren Rotor-Segeln aufweist. Die Erzeugung des Vorschubs erfolgt dabei über eine konventionelle Antriebsmaschine, die durch eine konventionelle Steuerung gesteuert wird, und die Ausnutzung des Magnus-Effekts durch die Rotor-Segel. Die konventionelle Antriebsmaschine kann die Rotor-Segel antreiben, welche allerdings auch durch einen eigenen Antrieb angetrieben werden können. Die Steuerung der Rotor-Segel erfolgt durch eine auf der Brücke vorgesehene Steuerungseinheit mit zwei Hebeln, über die die Drehgeschwindigkeit und Drehrichtung der Rotor-Segel eingestellt werden kann, um hierdurch die Richtung der durch den Magnus-Effekt hervorgerufenen Vorschubkraft zu beeinflussen.

Aus der DE 10 2005 028 447 A1 ist ein Schiff mit einer Vielzahl von Magnus-Rotoren bekannt, wobei jedem der Vielzahl von Magnus-Rotoren ein individuell ansteuerbarer elektrischer Motor zum Drehen des Magnus-Rotors zugeordnet ist. Jedem elektrischen Motor ist ein Umrichter zugeordnet, um die Drehzahl und/oder die Drehrichtung des elektrischen Motors zu steuern.

Die Aufgabe der vorliegenden Erfindung ist es, einen wirtschaftlichen Betrieb eines Schiffs vorzusehen, welches mit Magus-Rotoren angetrieben wird.

Diese Aufgabe wird durch ein Schiff nach Anspruch 1 bzw. ein Verfahren nach Anspruch 9 gelöst.

Somit wird ein Frachtschiff vorgesehen, welches eine Vielzahl von Magnus-Rotoren, eine zentrale Steuereinheit sowie einen elektrischen Motor als Hauptantrieb aufweist. Dabei können die Magnus-Rotoren jeweils einzeln von der zentralen Steuereinheit in einem ersten Betriebsmodus derart angesteuert werden, dass ein maximaler Vortrieb erhalten wird, wobei die Differenz aus dem gewünschten Vortrieb und dem durch die Rotation der Magnus-Rotoren erhaltenen Vortrieb durch den elektrischen Motor erbracht wird. In einem zweiten Betriebsmodus werden die Magnus-Rotoren durch die zentrale Steuereinheit ausschaltet und der gewünschte Vortrieb durch den elektrischen Motor erbracht.

Die Unterscheidung dieser zwei Betriebsmodi ist vorteilhaft, da das erfindungsgemäße Schiff je nach seinem momentanen Einsatz, d.h. die Fahrt auf offener See oder die Einfahrt oder das Anlegen in einem Hafen, optimal betrieben werden kann und hierdurch der Kraftstoffverbrauch des Schiffes reduziert und damit die Wirtschaftlichkeit des Schiffes gesteigert werden kann. So kann auf offener See der Kurs des Schiffes nach der Windrichtung gewählt werden, um das Ziel der Fahrt mit einer Vortriebskraft zu erreichen, die möglichst viel durch die Magnus-Rotoren gewonnen wird und bei der möglichst viel auf den Hauptantrieb verzichtet werden kann. Dabei wird gleichzeitig sichergestellt, dass in Situationen, in denen der Kurs des Schiffes nicht nach der Windrichtung gewählt werden kann, der Vortrieb des Schiffes gegeben ist, da dann der Hauptantrieb voll zum Einsatz kommt und die Magnus-Rotoren ausgeschaltet sind.

Gemäß der Erfindung steuert die Steuereinheit die Magnus-Rotoren in einem dritten Betriebsmodus derart an, dass durch die Magnus-Rotoren ein Vortrieb erhalten wird, der geringer ist als der maximale Vortrieb der Magnus-Rotoren, wobei die Differenz aus dem gewünschten Vortrieb und dem durch die Rotation der Magnus-Rotoren erhaltenen Vortrieb durch den elektrischen Motor erbracht wird. Durch diesen Betriebsmodus wird die Wirtschaftlichkeit des erfindungsgemäßen Schiffes erhöht, da in Situationen, in denen die Magnus-Rotoren zwar eingesetzt werden können, jedoch der Kurs des Schiffes nicht auf ihre Wirkung hin optimiert werden kann, trotzdem eine Unterstützung des Vortriebs des Schiffes erfolgen kann, falls die Windeinfallrichtung in Kombination mit dem gegebenen Kurs des Schiffes eine Vortriebskraft erzeugt. Auf diese Weise kann in diesem Betriebsmodus eine Unterstützung des Hauptantriebs durch die Magnus-Rotoren erreicht werden, so dass auch hier Kraftstoff gespart werden kann.

Gemäß der Erfindung weist das erfindungsgemäße Frachtschiff ferner einen Propeller auf, der einen einstellbaren Pitch-Winkel aufweist und durch den elektrischen Motor angetrieben wird. Das Schiff weist auch eine Verbrennungskraftmaschine auf, welche mit einem elektrischen Generator gekoppelt ist, um elektrische Energie zu erzeugen. Das Schiff weist ferner eine Bedieneinheit zur Vorgabe des gewünschten Vortriebs auf. Dabei ist der gewünschte Vortrieb in dem ersten Betriebsmodus die absolute oder relative Geschwindigkeit des Schiffes, in dem zweiten Betriebsmodus die Pitch-Steigung des Propellers und in dem dritten Betriebsmodus die absolute oder relative Leistung des elektrischen Motors.

Vorteilhaft ist dabei, dass die Bedienungsfreundlichkeit des erfindungsgemäßen Schiffes durch das Vorsehen einer Bedieneinheit gesteigert werden kann, bei der je nach Betriebsmodus des Schiffes unterschiedliche Vorgaben eines Vortriebs getätigt werden können. Dies ist deshalb vorteilhaft, weil in jedem Betriebsmodus eine andere Wertung des Maßes des Vortriebs vorgenommen wird. So ist es bei einem Manövriervorgang, z.B. in einem Hafen, vorteilhaft, das Maß der Vorwärts- bzw. Rückwärtsbewegung durch die Pitch-Steigung des Propellers einzustellen, da hierdurch die Vorwärts- bzw. Rückwärtsbewegung sehr fein und mit nur geringer Zeitverzögerung gesteuert werden kann. Andererseits ist es auf hoher See deutlich anschaulicher für das Personal des Schiffes, die gewünschte Geschwindigkeit, absolut oder relativ, vorzugeben.

Gemäß einem Aspekt der Erfindung erhält die Steuereinheit eine Windgeschwindigkeit, eine Windrichtung, ein vorgegebenes Ziel des Schiffes und bzw. oder Navigationsinformationen einer Navigationseinheit. Dies ist vorteilhaft, da der Steuerung des Schiffes hierdurch die nötigen Informationen zur Verfügung stehen, um einen Kurs des Schiffes zu berechnen.

Gemäß einem weiteren Aspekt der Erfindung steuert die Steuereinheit die Drehzahl und bzw. oder die Drehrichtung der Magnus-Rotoren in Abhängigkeit der Windgeschwindigkeit, der Windrichtung, des vorgegebenen Kurses und bzw. oder der Navigationsinformationen der Navigationseinheit. Vorteilhaft ist dabei, dass eine optimale Wirkung der Magnus-Rotoren für die Erzeugung des Vortriebs des Schiffes erreicht und hierdurch gleichzeitig der Kraftstoffverbrauch des Schiffes reduziert werden kann.

Gemäß einem Aspekt der Erfindung verwendet die Steuereinheit zur Bestimmung der Drehzahl und bzw. oder der Drehrichtung der Magnus-Rotoren Kennlinien, die in der Steuereinheit vorgesehen sind. Durch die Verwendung dieser Kennlinien, die für jeden Magnus-Rotor individuell vorgesehen sein können, kann der Vortrieb für jeden einzelnen Magnus-Rotor optimiert werden, da sein genaues Verhalten bei der Erzeugung der Vortriebskraft in Abhängigkeit von Drehzahl und Drehrichtung und Windgeschwindigkeit bekannt sind. Diese Kennlinien können durch Berechnung oder durch Messungen für jeden Magnus-Rotor einzeln oder auch gemeinsam bestimmt werden.

Gemäß einem weiteren Aspekt der Erfindung bestimmt die Steuereinheit in Abhängigkeit der Windgeschwindigkeit, der Windrichtung, des vorgegebenen Ziels und bzw. oder der Navigationsinformationen einen Kurs, bei dem der durch die Rotation der Magnus-Rotoren erhaltene Vortrieb maximal ist. Hierdurch kann der durch die Magnus-Rotoren erzeugte Vortrieb maximiert werden, da sich die Steuerung bei der Bestimmung des Kurses im Wesentlichen an den Windverhältnissen orientiert und diese optimal ausnutzt, wodurch das erfindungsgemäße Schiff so viel wie möglich zum Ziel segelt und damit auch der Vortrieb, der durch den Hauptantrieb durch Kraftstoffverbrauch erzeugt wird, minimiert wird.

Gemäß einem Aspekt der Erfindung steuert die Steuereinheit das Schiff so, um den bestimmten Kurs einzunehmen, bei dem der durch die Rotation der Magnus-Rotoren erhaltene Vortrieb maximal ist. Auf diese Weise kann die Wahl und Ausführung des Kurses der Steuerung insoweit überlassen werden, dass diese einen für die Ausnutzung der Vortriebskraft durch die Magnus-Rotoren optimalen Kurs bestimmt und auch ausführt, um hierdurch stets auf sich ändernde Windverhältnisse, insbesondere auf eine Veränderung der Windrichtung, sofort zu reagieren und hierdurch die Kraftstoffersparnis zu optimieren.

Gemäß einem weiteren Aspekt der Erfindung berechnet die Steuereinheit für jeden Betriebsmodus den Verbrauch des Kraftstoffs der Verbrennungskraftmaschine, vergleicht diesen Verbrauch mit dem Verbrauch anderer, hinsichtlich ihrer Größe vergleichbarer Schiffe und gibt den berechneten Verbrauch und das Ergebnis des Vergleichs aus. Hierdurch kann jederzeit durch das Personal des Schiffes oder auch andere Empfänger dieser Information, die sich auch mittels Datenübertragung z.B. drahtlos an Empfänger außerhalb des Schiffes übertragen lässt, die Wirtschaftlichkeit des erfindungsgemäßen Schiffes beurteilen.

Gemäß einem weiteren Aspekt der Erfindung ist eine Vielzahl von Verbrennungskraftmaschinen vorgesehen, die jeweils mit einem elektrischen Generator einer Vielzahl von Generatoren gekoppelt sind, um elektrische Energie zu erzeugen. Ferner schaltet die Steuereinheit zur Erbringung einer geforderten elektrischen Energie so viele Verbrennungskraftmaschinen der Vielzahl von Verbrennungskraftmaschinen ein, dass die geforderte elektrische Energie durch die jeweiligen Generatoren mindestens erzeugt wird, und schaltet so viele Verbrennungskraftmaschinen der Vielzahl von Verbrennungskraftmaschinen aus, dass der Verbrauch des Kraftstoffs durch die Verbrennungskraftmaschinen minimiert wird. Auf diese Weise können statt einer einzigen großen Verbrennungskraftmaschine mehrere kleinere Verbrennungskraftmaschinen vorgesehen werden. Dies ist vorteilhaft, da statt eines Betriebs der einen großen Verbrennungskraftmaschine je nach geforderter Leistung einzelne kleinere Verbrennungskraftmaschinen zeitweise ausgeschaltet und damit hinsichtlich ihres Verschleißes geschont werden können. Ferner kann bei einem Schaden oder Ausfall einer der kleineren Verbrennungskraftmaschinen diese abgeschaltet und repariert oder ausgetauscht werden, ohne dass der Betrieb der verbleibenden Verbrennungskraftmaschinen hierdurch eingeschränkt wird.

Ausführungsbeispiele und Vorteile der Erfindung werden nachstehend unter Bezugnahme auf folgende Figuren näher erläutert:
- Fig.1: zeigt eine perspektivische Ansicht eines Schiffes gemäß einem ersten Ausführungsbeispiel;
- Fig. 2: zeigt ein Blockschaltbild einer Steuerung des Schiffes gemäß dem ersten Ausführungsbeispiel nach Fig. 1;
- Fig. 3: zeigt eine schematische Darstellung eines Erzeugungssystems für elektrische Energie;
- Fig. 4: zeigt eine schematische Darstellung eines weiteren Erzeugungssystems für elektrische Energie;
- Fig. 5: zeigt eine perspektivische Ansicht des Schiffes gemäß dem ersten Ausführungsbeispiel mit Teilen der Steuerung nach Fig. 2,
- Fig. 6: zeigt eine Ansicht einer Bedieneinheit des Schiffes gemäß dem ersten Ausführungsbeispiel.

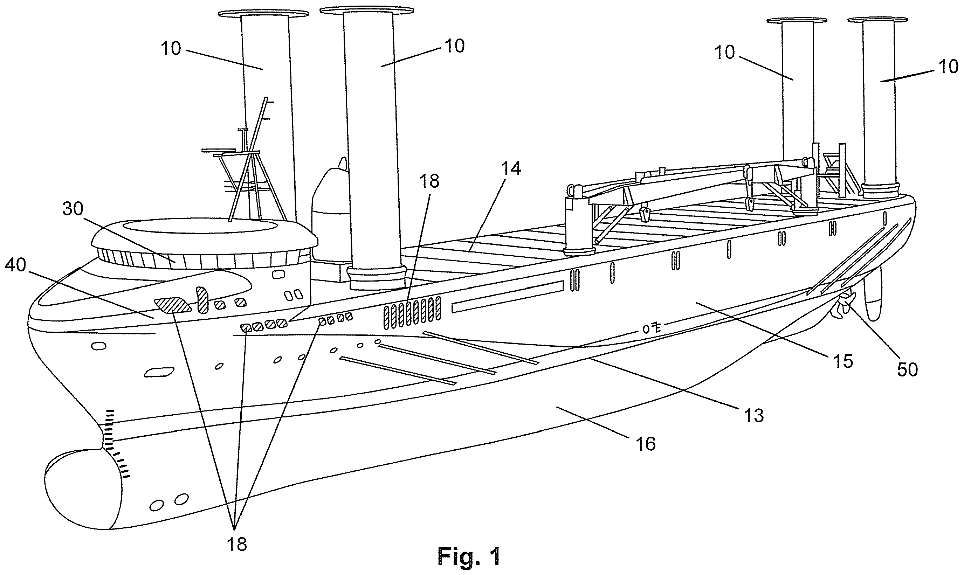

**Fig. 1** zeigt eine schematische Darstellung eines Schiffes gemäß einem ersten Ausführungsbeispiel. Das Schiff weist dabei einen Rumpf bestehend aus einem Unterwasserbereich 16 und einem Überwasserbereich 15 auf. Ferner weist das Schiff vier Magnus-Rotoren 10 bzw. Flettner-Rotoren 10 auf, welche an den vier Ecken des Rumpfes angeordnet und vorzugsweise zylindrisch ausgebildet sind. Die vier Magnus-Rotoren 10 stellen hierbei windbetriebene Antriebe für das erfindungsgemäße Schiff dar. Das Schiff weist ein im Vorschiff angeordnetes Deckshaus 40 mit einer Brücke 30 auf. Das Schiff weist unter Wasser eine Schraube 50 bzw. einen Propeller 50 auf. Für eine verbesserte Manövrierfähigkeit kann das Schiff ebenfalls Querstrahlruder aufweisen, wobei vorzugsweise eines am Heck und eines bis zwei Querstrahlruder am Bug vorgesehen sind. Vorzugsweise sind diese Querstrahlruder elektrisch angetrieben. Die Unterkünfte, Kombüse, Provianträume, Messen usw. sind im Deckshaus 40 angeordnet. Hierbei weist das Deckshaus 40, die Brücke 30 sowie alle Aufbauten oberhalb des Wetterdecks 14 eine aerodynamische Formgebung auf, um den Windwiderstand zu reduzieren. Dies wird insbesondere dadurch erreicht, dass scharfe Kanten und scharfkantige Anbauteile im Wesentlichen vermieden werden. Um den Windwiderstand zu minimieren und eine aerodynamische Formgebung zu erreichen, werden möglichst wenige Aufbauten vorgesehen.

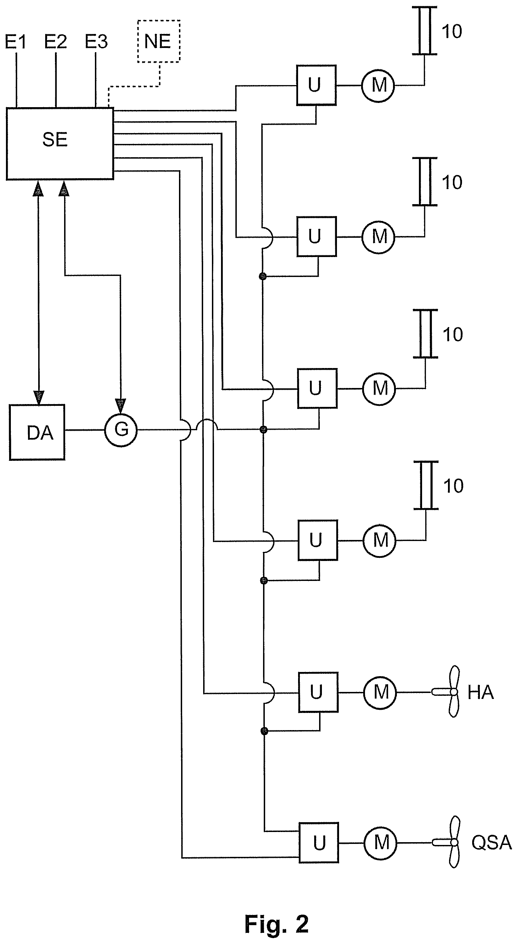

**Fig. 2** zeigt ein Blockschaltbild einer Steuerung des Schiffes gemäß dem ersten Ausführungsbeispiel von **Fig. 1**. Jeder der vier Magnus-Rotoren 10 weist einen eigenen Motor M sowie einen separaten Umrichter U auf. Die Umrichter U sind mit einer zentralen Steuereinheit SE verbunden. Ein Dieselantrieb DA ist mit einem Generator G verbunden, um elektrische Energie zu erzeugen. Dabei kann statt eines Dieselantriebs DA auch ein Verbund von mehreren einzelnen Dieselantrieben DA mit dem Generator G oder einer entsprechenden Anzahl von einzelnen Generatoren G verbunden sein, die jeweils als Ganzes betrachtet nach außen die gleiche Leistung zur Verfügung stellen wie ein entsprechend einzelner großer Dieselantrieb DA oder Generator G. Die jeweiligen Umrichter U sind mit dem Generator G verbunden. Ferner ist ein Hauptantrieb HA gezeigt, welcher ebenfalls mit einem Elektromotor M verbunden ist, welcher wiederum mit einem separaten Frequenzumrichter U sowohl mit der Steuereinheit SE als auch mit dem Generator G verbunden ist. Die vier Magnus-Rotoren 10 können hierbei sowohl einzeln als auch unabhängig voneinander gesteuert werden.

Die Steuerung der Magnus-Rotoren 10 sowie des Hauptantriebes HA erfolgt durch die Steuereinheit SE, welche aus den aktuellen Windmessungen (Windgeschwindigkeit, Windrichtung) E1, E2 sowie anhand der Informationen zu Soll- und Ist-Fahrtgeschwindigkeit E3 (sowie optional anhand von Navigationsinformationen von einer Navigationseinheit NE) die entsprechende Drehzahl und Drehrichtung für den einzelnen Magnus-Rotor 10 sowie des Hauptantriebes HA bestimmt, um eine gewünschte Vortriebskraft zu erreichen. Die Steuereinheit SE regelt in Abhängigkeit der Schubkraft der vier Magnus-Rotoren 10 sowie der aktuellen Schiffsgeschwindigkeit und dem Sollwert der Geschwindigkeit die Hauptantriebsanlage HA stufenlos herunter, soweit dies erforderlich ist. So kann die Windenergieleistung unmittelbar und automatisch in eine Kraftstoffersparnis umgesetzt werden. Durch die unabhängige Steuerung der Magnus-Rotoren 10 kann das Schiff auch ohne Hauptantrieb HA gesteuert werden. Insbesondere kann durch entsprechende Steuerung der jeweiligen Magnus-Rotoren 10 eine Stabilisierung des Schiffs bei einem starken Seegang erreicht werden.

Ferner können ein oder mehrere Querstrahlruder QSA vorgesehen werden, um die Manövrierbarkeit des Schiffes zu verbessern. Hierbei können ein Querstrahlruder QSA hinten sowie ein bis zwei Querstrahlruder QSA vorne am Schiff vorgesehen sein. Jedem Querstrahlruder QSA sind ein Motor M zum Antrieb sowie ein Umrichter U zugeordnet. Der Umrichter U ist wiederum mit der zentralen Steuereinheit SE und dem Generator G verbunden. Somit können die Querstrahlruder (lediglich eins ist in der **Fig. 2** gezeigt) ebenfalls zum Steuern des Schiffes verwendet werden, da sie mit der zentralen Steuereinheit SE (über den Umrichter U) verbunden sind. Die Querstrahlruder QSA können jeweils einzeln hinsichtlich ihrer Drehzahl und Drehrichtung von der zentralen Steuereinheit SE angesteuert werden. Die Steuerung kann dabei wie oben beschrieben erfolgen.

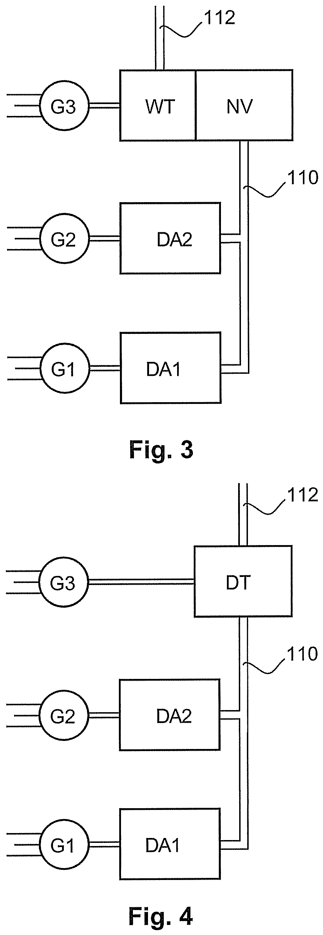

**Fig. 3** zeigt eine schematische Darstellung eines Erzeugungssystems für elektrische Energie. Das Erzeugungssystem gemäß **Fig. 3** kann in die Steuerung gemäß **Fig. 2** integriert werden. Beispielhaft sind zwei Dieselantriebe bzw. Verbrennungskraftmaschinen DA mit nachgeschalteten elektrischen Generatoren G1, G2 dargestellt. Die Abgase der Dieselantriebe DA werden in einem Abgasrohr 110 abgeführt und einer Nachverbrennungseinheit NV zugeführt. In dieser Nachverbrennungseinheit NV werden die in den Dieselantrieben DA noch nicht verbrannten Bestandteile des Abgases verbrannt und über einen nachgeschalteten Wärmetauscher WT wird diese Verbrennungswärme, aber auch ein beträchtlicher Teil der Wärme des Abgases, diesem entzogen und für den Antrieb eines weiteren Generators G3 verwendet, der aus dieser Wärme zusätzliche elektrische Energie erzeugt. Somit werden die Dieselantriebe DA entsprechend geringer beansprucht und deren Brennstoffverbrauch ist entsprechend geringer. Die derart nachbehandelten Abgase können anschließend über einen Schornstein 112 ausgestoßen werden. Die von den Generatoren G1 bis G3 erzeugte elektrische Energie kann, wie in **Fig. 2** gezeigt, dem Motor M des Hauptantriebs HA beispielsweise über ein elektrisches Bordnetzwerk zugeführt werden. Zusätzlich können die Umrichter U und die elektrischen Motoren M der Magnus-Rotoren 10 über das Bordnetzwerk mit elektrischer Energie versorgt werden. Das Bordnetzwerk kann ferner dazu verwendet werden, die elektrische Energieversorgung des Schiffes zu gewährleisten.

**Fig. 4** zeigt eine schematische Darstellung eines weiteren Erzeugungssystems für elektrische Energie. Dabei entsprechen die dargestellten Elemente des Erzeugungssystems für elektrische Energie und deren Bezugszeichen denen der **Fig. 3**. In dieser Ausführungsform ist alternativ zu der Nachverbrennungseinheit NV und dem Wärmetauscher WT eine Dampfturbine DT vorgesehen. Diese kann allerdings auch gemeinsam mit der Nachverbrennungseinheit NV und dem Wärmetauscher WT der **Fig. 3** vorgesehen werden. Dabei werden die Abgase der Dieselantriebe DA durch das Abgasrohr 110 der Dampfturbine DT zugeführt. Diese nutzt die heißen Abgase zur Erzeugung von überhitztem Wasserdampf, mit dem eine Turbine zur Erzeugung elektrischer Energie angetrieben wird. Die in der Dampfturbine DT abgekühlten Abgase werden dann über einen Schornstein 112 ausgestoßen. Die so gewonnene elektrische Energie wird dann in das Bordnetzwerk des Schiffes eingespeist und kann so ebenfalls dem Hauptantrieb HA, den Querstrahlrudern QSA und bzw. oder den Motoren M der Magnus-Rotoren 10 sowie sonstigen Verbrauchern im Bordnetzwerk zur Verfügung gestellt werden.

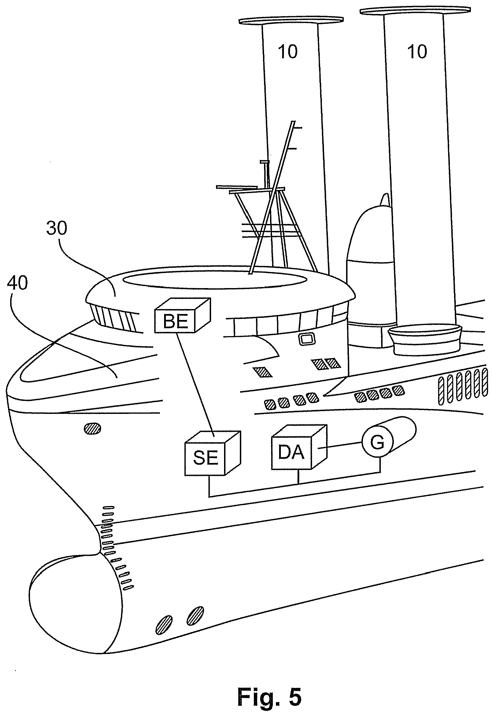

**Fig. 5** zeigt eine perspektivische Ansicht des Schiffes gemäß dem ersten Ausführungsbeispiel mit Teilen der Steuerung nach **Fig. 2**. Dargestellt sind die Steuereinheit SE zur Ansteuerung des Dieselantriebs DA und des Generators G. Weitere Vorrichtungen der Steuerung nach **Fig. 2** sind zur Verbesserung der Übersichtlichkeit nicht dargestellt. Die Steuereinheit SE ist mit einer Bedieneinheit BE verbunden, die z.B. auf der Brücke des Schiffes angeordnet sein kann. Über diese Bedieneinheit BE können Eingaben durch das Personal des Schiffes an die Steuereinheit SE getätigt werden. Die Bedieneinheit BE kann Eingabemöglichkeiten, wie eine Tastatur oder ein Touchscreen-Display, aufweisen. Ebenso können Knöpfe zum Drücken oder Drehen, Taster, Schalter, Hebel oder dergleichen als Eingabemittel vorgesehen sein. Diese können physisch ausgeprägt und bzw. oder z.B. auf einem Touchscreen-Display virtuell dargestellt sein. Auch ist es möglich, Eingaben an die Steuereinheit SE mittels Spracheingabe, z.B. über ein Mikrophon, zu tätigen. Ferner können mittels der Bedieneinheit BE auch Informationen und Meldungen der Steuereinheit SE angezeigt und ausgegeben werden, z.B. optisch auf Anzeigeelementen wie Displays oder Monitoren, akustisch über Lautsprecher etc. als Signal- oder Warntöne oder gesprochene Mitteilung oder auch mittels Drucker oder Plotter als Ausdruck auf Papier oder dergleichen.

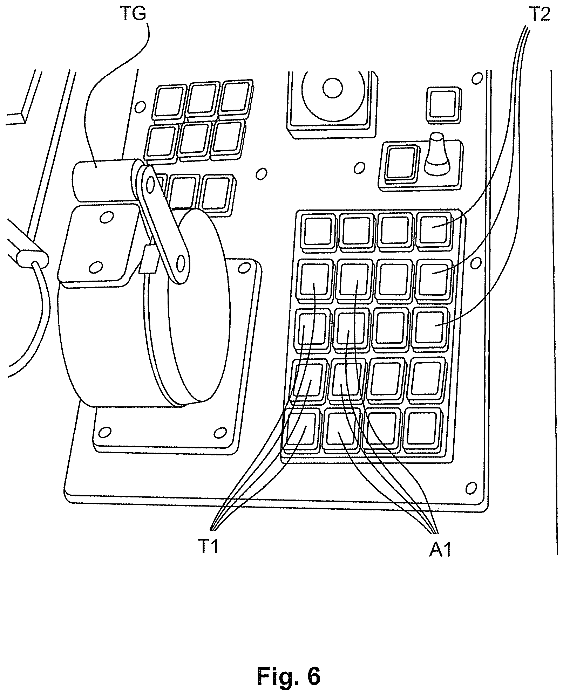

**Fig. 6** zeigt eine Ansicht einer Bedieneinheit des Schiffes gemäß dem ersten Ausführungsbeispiel. Es ist ein sogenannter Telegraph TG dargestellt, wie er auf Schiffen zur Vorgabe z.B. einer Geschwindigkeit des Schiffes oder einer Umdrehungszahl des Hauptantriebs genutzt werden kann. Rechts daneben ist ein Tastenfeld angeordnet mit einer vertikalen Reihe von Tasten T1 zur Eingabe eines Modus, in den das Schiff durch das Drücken dieser Taste versetzt wird. Rechts neben der vertikalen Reihe der Tasten T1 ist parallel eine vertikale Reihe von Anzeigen A1 angeordnet, die den jeweiligen Tasten T1 zugeordnet sind und anzeigen, ob der entsprechende Taster T1 betätigt und damit der entsprechende Modus ausgewählt ist. Ferner ist weiter rechts eine zweite vertikale Reihe von Tasten T2 angeordnet, über deren Betätigung eine jeweilige Betriebsweise eines Modus ausgewählt werden. Dabei stellen diese Betriebsweisen Unterfunktionen eines Modus oder auch mehrerer Modi dar. Die Auswahl einer Betriebsweise über die Taster T2 wird jeweils durch eine in die Taste T2 integrierte Anzeige angezeigt.

Über die Bedieneinheit BE können u.a. Eingaben wie der Kurs des Schiffes oder die Stellung des Ruders, die Geschwindigkeit des Schiffes, die Umdrehungszahl des Propellers 50 über den Telegraphen TG oder Eingaben wie der Einsatz der Querstrahlruder QSA, das Ein- und Ausschalten des Dieselantriebs DA und dergleichen über die Tasten T1 und bzw. oder die Tasten T2 gesteuert werden. Derartige Eingaben können als manuelle Vorgaben in einem manuellen Modus durch das Personal des Schiffes vorgenommen werden oder auch Bestandteil automatisierter Sequenzen der Steuerung in verschiedenen automatischen Modi der Steuerung sein.

Um die Möglichkeiten des erfindungsgemäßen Schiffs für einen wirtschaftlichen Betrieb auszuschöpfen, ist eine Steuerung erforderlich, die die verschiedenen Möglichkeiten der Erzeugung elektrischer Energie sowie deren Umsetzung in die Vortriebskraft des Schiffes optimal ausnutzt. Dabei lassen sich die in den **Fig. 2 bis 4** dargestellten Vorrichtungen zur Erzeugung elektrischer Energie sowie die Vorrichtungen zur Erzeugung der Vortriebskraft des Schiffes unter Aufnahme elektrischer Energie wie folgt zusammenfassen:
- Vorrichtungen zur Erzeugung elektrischer Energie:
   - Dieselantrieb DA mit Generator G; und
   - Nachverbrennungseinheit NV und Wärmetauscher WT oder Dampfturbine DT für Abgase des Dieselantriebs DA.
- Vorrichtungen zur Erzeugung der Vortriebskraft des Schiffes unter Aufnahme elektrischer Energie:
   - Hauptantrieb HA, d.h. Propeller 50 mit Motor M und Umrichter U;
   - Magnus-Rotor 10 mit Motor M und Umrichter U.

Die Querstrahlruder QSA mit Motor M und Umrichter U nehmen ebenfalls elektrische Energie auf, erzeugen hieraus jedoch eine quer zur Fahrtrichtung des Schiffs gerichtete Kraft. Da diese Querkraft nicht auf den Vortrieb des Schiffes gerichtet ist, bleiben die Querstrahlruder QSA bei dieser Auflistung außer Acht.

Zur Ausschöpfung der Möglichkeiten des erfindungsgemäßen Schiffs für einen wirtschaftlichen Betrieb wird vorgesehen, das Schiff in verschiedenen automatisierten Modi zu betreiben. Jeder dieser Modi ist für eine bestimmte Art des Schiffsbetriebs vorgesehen. Zwischen diesen automatisierten Modi kann durch das Schiffspersonal mittels der Bedieneinheit BE umgeschaltet werden, ebenso wie zwischen einem manuellen Modus und den automatisierten Modi. Dabei kann im Fall einer Störung auch eine automatische Abschaltung der automatisierten Modi durch die Steuerung erfolgen, so dass dann in dem manuellen Modus das Schiff unter der Kontrolle des Schiffspersonals sicher weiter betrieben werden kann. In allen Modi sind die entsprechenden Abläufe in der Steuerung als automatisierte Sequenzen hinterlegt.

Als ein erster Modus kann ein Hafen-Modus ("*Harbour-Mode*") vorgesehen sein, bei dem das Schiff in einem Hafen an der Kaimauer liegt, um z.B. Ent- oder Beladen zu werden. In diesem Hafen-Modus ist keine Fahrt des Schiffes vorgesehen, d.h. der Hauptantrieb HA bzw. der Propeller 50 und die Querstrahlruder QSA sind abgeschaltet. Ebenso sind die Motoren der Magnus-Rotoren 10 ausgeschaltet, da keine Vortriebskraft benötigt wird bzw. erzeugt werden darf. Somit ist der Hafen-Modus dadurch bestimmt, dass das Schiff keine Vortriebskraft aufweist. Durch die Steuerungseinheit SE kann der bzw. ein Dieselantrieb DA betrieben werden, um das Bordnetzwerk, z.B. zum Betrieb der Steuerungseinheit SE selbst, der Bedieneinheit BE sowie der elektrischen Versorgung der Kabinen und Kombüse des Schiffs, schiffseigener Kräne oder sonstige Verladevorrichtungen, Klappen des Verladeraums, Beleuchtungsanlagen etc. mit elektrischer Energie zu versorgen. Dabei kann entweder ein einziger im Schiff vorhandener Dieselantrieb DA bei einer entsprechend geringen Leistung betrieben werden oder mehrere Dieselantriebe DA einer Vielzahl von Dieselantrieben DA ausgeschaltet sein, während ein Dieselantrieb DA oder mehrere Dieselantriebe DA einer Vielzahl von Dieselantrieben DA eingeschaltet sind.

Ein zweiter Modus kann ein Manöver-Modus ("*Maneuver-Mode*") sein. Dieser kann verwendet werden, um innerhalb eines Hafens, einer Schleuse, einer Werft, eines engen Flusses oder Kanals oder dergleichen zu manövrieren, d.h. das Schiff, z.B. von der Kaimauer oder Schleusenwand freizusetzen oder an dieser anzulegen bzw. in einem nahen Abstand zu Hindernissen das Schiff zu bewegen. Hierzu können neben dem Hauptantrieb HA bzw. Propeller 50 die Querstrahlruder QSA eingesetzt werden, falls diese in dem Schiff vorgesehen sind. Daher können in dem Manöver-Modus ebenfalls mindestens ein Dieselantrieb DA betrieben werden oder gegebenenfalls mehrere Dieselantriebe DA einer Vielzahl von Dieselantrieben DA, falls die mehreren Dieselantriebe DA zur gemeinsamen Bereitstellung der im Manöver-Modus erforderlichen elektrischen Energie vorgesehen sind. Weiterhin können im Manöver-Modus alle Vorrichtungen über das Bordnetzwerk versorgt werden, die auch im Hafen-Modus vorgesehen sind.

Als ein dritter Modus kann ein Fluss-Modus ("*River-Mode*") vorgesehen sein. Dieser Modus kann auf breiteren Gewässern wie einem breiten Kanal, z.B. dem Nord-Ostsee-Kanal, einem breiten gut schiffbaren Fluss oder in küstennahen Gewässern und Schifffahrtsstraßen angewendet werden. In diesen Situationen ist ein seitliches Manövrieren nicht vorgesehen, weshalb die Querstrahlruder QSA ausgeschaltet sind. Ferner kann davon ausgegangen werden, dass in dem Fluss-Modus Kurs und Geschwindigkeit des Schiffes über längere Zeiträume beibehalten werden können, anders als im Manövrier-Modus, der durch die Kurzlebigkeit seiner Mänoverhandlungen geprägt ist. Somit können im Fluss-Modus die Magnus-Rotoren 10 betrieben werden, um einen Teil der benötigten Vortriebskraft über diese zu gewinnen und den Hauptantrieb HA bzw. den Propeller 50 entsprechend herunterzufahren. Hierbei wird jedoch der Einsatz der Magnus-Rotoren 10 begrenzt, so dass die durch die Magnus-Rotoren 10 erzeugte Vortriebskraft ein bestimmtes Verhältnis zur durch den Hauptantrieb HA erzeugten Vortriebskraft nicht überschreitet. Dies kann z.B. über eine Drehzahlbegrenzung der Magnus-Rotoren 10 erfolgen.

Dabei ist zu beachten, dass in diesem Fluss-Modus die Manövrierfähigkeit des Schiffes durch die Enge des Flusses, des Kanals oder der Schifffahrtsstraße oder die Nähe zur Küste, zu seichten Gewässern oder zu anderen Seefahrzeugen deutlich eingeschränkt ist, so dass der Kurs des Schiffes nicht beliebig gewählt und auf die Windrichtung zur Optimierung des Magnus-Effekts ausgerichtet werden kann. Somit kann bei einer günstigen Windeinfallsrichtung ein Teil der Vortriebskraft mittels der Magnus-Rotoren 10 gewonnen werden, jedoch kann der Kurs des Schiffes nur geringfügig der Windrichtung angepasst werden. Daher kann nur teilweise eine Vortriebskraft mittels der Magnus-Rotoren 10 erreicht werden, die den Hauptantrieb HA bzw. den Propeller 50 entlastet und hierdurch den Energiebedarf des Dieselantriebs DA reduziert. Kann ein Teil der Vortriebskraft aus den Magnus-Rotoren 10 gewonnen werden, so kann der einzige Dieselantrieb DA bei einer entsprechend geringeren Leistung betrieben werden oder es können einige Dieselantriebe DA einer Vielzahl von Dieselantrieben DA ausgeschaltet und einige Dieselantriebe DA der Vielzahl der Dieselantriebe DA zur Bereitstellung einer geringeren gemeinsamen Leistung betrieben werden.

In diesem dritten Fluss-Modus kann ferner auch die Nachverbrennungseinheit NV und der Wärmetauscher WT bzw. die Dampfturbine DT zur Nutzung der Abgase des Dieselantriebs DA genutzt werden, da sich erst bei einem kontinuierlichen Betrieb des Dieselantriebs DA, d.h. bei einem stationären Betriebszustand, der Aufwand des Hochfahrens und Betreibens der Nachverbrennungseinheit NV und der Wärmetauscher WT bzw. der Dampfturbine DT lohnt und mehr elektrische Energie erzeugt, als zum Hochfahren und Betreiben selbst erforderlich ist.

Ein vierter Modus wird als See-Modus (*"Sea-Mode"*) bezeichnet. Dieser ist für die Fahrt auf hoher See vorgesehen, d.h. als freie Fahrt ohne Hindernisse, die zu umschiffen sind. In diesem vierten See-Modus kann die Erzeugung der Vortriebskraft durch die Magnus-Rotoren 10 optimal ausgenutzt werden, da sich der Kurs des Schiffes an der Windeinfallsrichtung orientieren kann, d.h. dass durch die Wahl des Kurses des Schiffs eine Windeinfallsrichtung quer zur Längsrichtung des Schiffs zur Optimierung der Vortriebskraft aus den Magnus-Rotoren 10 erreicht werden kann. Zur Bewirkung einer optimalen, durch die Magnus-Rotoren 10 hervorgerufenen Vortriebskraft werden in diesem vierten See-Modus die Magnus-Rotoren 10 mit ihrer vollen Drehzahl angetrieben. Desweiteren kann aufgrund der stationären Antriebsverhältnisse die Nachverbrennungseinheit NV und der Wärmetauscher WT bzw. die Dampfturbine DT zur Nutzung der Abgase des Dieselantriebs DA mit ihrer vollen Leistungsfähigkeit betrieben werden. Hierdurch ist es in diesem vierten See-Modus bei entsprechend geeigneten Windverhältnisse möglich, die Leistung des Dieselantriebs DA soweit herunterzufahren bzw. eine entsprechende Anzahl von Dieselantrieben DA der Vielzahl von Dieselantrieben DA auszuschalten und hierdurch Kraftstoff einzusparen in dem Umfang, wie die gewünschte Vortriebskraft aus den Magnus-Rotoren 10 gewonnen werden kann. Aus der verbleibenden Leistung des Dieselantriebs DA bzw. der Dieselantriebe DA kann ferner elektrische Energie mittels der Nachverbrennungseinheit NV und des Wärmetauscher WT bzw. der Dampfturbine DT gewonnen werden. Die Querstrahlruder QSA sind in diesem Modus ausgeschaltet.

Bei diesem vierten See-Modus kann der Kurs im Wesentlichen frei bestimmt werden. Dabei sind selbstverständlich andere Seefahrzeuge zu beachten. Doch kann bei einer frühzeitigen Erkennung dieser weiteren Verkehrsteilnehmer sowie bei Kenntnis des Seegebietes schon frühzeitig ein Kurs angelegt werden, der Kollisionen sicher ausschließt und dennoch eine sehr freizügige Wahl des Kurses erlaubt, die sich an den vorherrschenden Windverhältnissen orientiert. So kann dieser nahezu freiwählbare Kurs zu einer Optimierung des Antriebsverhaltens hinsichtlich verschiedener Gesichtspunkte genutzt werden:
- Betriebsweise zur Optimierung der Zeitersparnis ("*Time-Safe-Mode*")
   In diesem Fall hat das schnellstmögliche Erreichen des Zielhafens oberste Priorität bei der Wahl des Kurses. Daher wird ein möglichst direkter Weg zum Zielhafen gewählt und die gewünschte Geschwindigkeit maßgeblich mit dem Hauptantrieb HA bzw. dem Propeller 50 erreicht. Es erfolgt eine Unterstützung der Vortriebskraft durch den Betrieb der Magnus-Rotoren 10, falls sich bei vorgegebenem Kurs aufgrund der Windrichtung eine Vortriebskraft ergibt. Eine Ausrichtung des Kurses zur Erreichung einer Vortriebskraft durch die Magnus-Rotoren 10 erfolgt jedoch ausdrücklich nicht. Mit anderen Worten wird in dieser Betriebsweise des See-Modus wie bei einem konventionellen Schiff der Kurs nach der Kürze der Strecke bestimmt und eine Unterstützung der Vortriebskraft durch die Magnus-Rotoren 10 nur dann erreicht, falls sich diese zufällig aus der Windrichtung in Kombination mit dem vorgegebenen Kurs des Schiffes ergibt.
- Betriebsweise zur Optimierung der Kosten ("*Cost-Safe-Mode*")
   In dieser Betriebsweise erfolgt die Ausrichtung und Berechnung des Kurses dahingehend, dass die Betriebskosten mit den Terminkosten verglichen werden. Zu den Betriebskosten zählen u.a. der Kraftstoffverbrauch der Dieselantriebe DA. So wird ein Kurs dahingehend vorgegeben, dass z.B. ein Termin sicher eingehalten werden kann, d.h. dass der Zielhafen pünktlich erreicht wird, jedoch gleichzeitig die hierfür verbleibende Zeit durch eine Anpassung der Geschwindigkeit bzw. eine Optimierung der Ausnutzung der Vortriebskraft durch die Magnus-Rotoren 10 ausgeschöpft wird. In anderen Worten wird nicht schneller als nötig gefahren, um den Kraftstoffverbrauch zu senken und dennoch das Ziel zur Vermeidung einer Terminstrafe oder dergleichen pünktlich zu erreichen.
- Betriebsweise zur Optimierung des Kraftstoffverbrauchs ("*Fuel-Safe-Mode*")
   In dieser Betriebsweise des See-Modus wird der Kurs durch die Steuerung dahingehend optimiert, dass die Vortriebskraft soweit wie möglich mittels der Magnus-Rotoren 10 erzeugt wird und der Dieselantrieb DA weitestgehend heruntergefahren werden kann, wodurch eine größtmögliche Kraftstoffersparnis erreicht werden kann. In dieser Betriebsweise wird daher der Kurs, soweit es der Zielhafen, das Seegebiet und der Schifffahrtsverkehr erlauben, an der Windrichtung ausgerichtet, um stets eine Windeinfallsrichtung von querab, d.h. quer zur Längsrichtung des Schiffes, zu erreichen, bei der der Magnus-Effekt am größten ist. Mit anderen Worten segelt das Schiff in dieser Betriebsweise möglichst viel mittels der Magnus-Rotoren 10 mit einem Wind von möglichst querab zum Zielhafen.

Da ohne eine besondere Notwendigkeit zum schnellstmöglichen Erreichen des Zielhafens davon ausgegangen werden kann, dass im Zweifel die Betriebsweise des Schiffes hinsichtlich der Reduzierung des Kraftstoffverbrauchs zu optimieren ist, kann in dem vierten See-Modus die Betriebsweise zur Optimierung des Kraftstoffverbrauchs ("*Fuel-Safe-Mode*") als Standardeinstellung vorgegeben sein, sobald der vierte See-Modus gewählt wird.

Bei allen o.g. Modi, in denen die Magnus-Rotoren 10 betrieben werden, werden die Windrichtung und Windgeschwindigkeit durch die Steuerung bestimmt und zum Betrieb der Magnus-Rotoren 10 hinsichtlich der Bestimmung der Drehrichtung und Drehgeschwindigkeit herangezogen, wie bzgl. der **Fig. 2** erläutert. Dabei wird ferner mittels der Bedieneinheit BE durch das Personal des Schiffes je nach Modus die Leistung des Hauptantriebs bzw. die gewünschte Geschwindigkeit des Schiffes vorgegeben, die durch die Steuerung bei der Bestimmung der Drehrichtung und Drehgeschwindigkeit der Magnus-Rotoren 10 mit einbezogen wird. Für die Magnus-Rotoren 10 sind jeweils Leistungskurven in der Steuereinheit SE vorgegeben, die bei der Ermittlung der Drehgeschwindigkeit in Abhängigkeit von gemessener Windrichtung und Windgeschwindigkeit sowie gewünschter Leistung bzw. Geschwindigkeit verwendet werden. Hierzu können theoretische berechnete Leistungskurven ebenso verwendet werden wie Leistungskurven, die durch Messungen z.B. auf speziellen Messfahrten ermittelt wurden.

Das Umschalten zwischen diesen vier Modi kann über die Bedieneinheit BE erfolgen. Über diese Bedieneinheit BE können ferner Vorgaben durch das Personal des Schiffes getätigt werden, die je nach gewähltem Modus unterschiedlich ausfallen können. So kann über einen sogenannten Fahrhebel oder auch Maschinentelegraphen z.B. in dem ersten Hafen-Modus direkt der Pitch-Winkel des Propellers 50 eingestellt werden, um das Schiff mittels des Hauptantriebs HA zu manövrieren.

In dem zweiten Manöver-Modus kann über den Fahrhebel direkt die Steigung des Propellers 50 vorgegeben werden. Hierdurch kann bei sich drehendem Hauptantrieb HA mit konstanter Drehzahl und Drehrichtung durch die Veränderung der Pitch-Steigung direkt die Vortriebskraft sowie die Fahrtrichtung des Schiffes, d.h. vorwärts oder rückwärts, über die Bedieneinheit BE vorgegeben werden.

In dem dritten Fluss-Modus kann über den Fahrhebel der Bedieneinheit BE direkt eine Leistung des Hauptantriebs HA bzw. des Propellers 50 vorgegeben werden, die von der Steuerung einzuhalten ist. Dabei kann es der Steuerung überlassen bleiben, wie sie diese Leistung erreicht, d.h. welche Leistung durch die Magnus-Rotoren 10 erreicht werden kann und welche restliche Leistung durch den Dieselantrieb DA oder die Vielzahl von Dieselantrieben DA zusätzlich aufgebracht werden muss. So kann z.B. eine Leistung des Hauptantriebs HA bzw. des Propellers 50 von 2.000 kW vorgegeben werden.

In dem vierten See-Modus kann über den Fahrhebel der Bedieneinheit BE die Geschwindigkeit des Schiffes als absoluter Wert oder auch relativ zur maximalen Geschwindigkeit des Schiffes vorgegeben werden. Die Steuerung kann dann den Kurs des Schiffes und die Drehrichtung und Drehgeschwindigkeit der Magnus-Rotoren 10 so optimieren, dass die vorgegebene Geschwindigkeit mit einem möglichst geringen Einsatz des Dieselantriebs DA bzw. einer möglichst geringen Anzahl von Dieselantrieben DA der Vielzahl von Dieselantrieben DA erreicht wird. Als Eingabe kann z.B. eine Geschwindigkeit von 75% vorgegeben sein, was einer absoluten Geschwindigkeit von 16 kn entsprechen kann.

Mittels der Bedieneinheit BE können auch je nach Modus verschiedene Informationen dem Personal des Schiffes zur Verfügung gestellt werden. So kann stets eine Ausgabe erfolgen, aufgrund welcher Eingaben die Steuerung derzeit einen Modus und bzw. oder eine Betriebsweise gewählt hat bzw. welcher Modus und bzw. oder welche Betriebsweise vom Personal des Schiffes eingestellt sind. Es können Messwerte angezeigt werden wie z.B. die Windrichtung oder die Windgeschwindigkeit, die nach **Fig. 2** als Messwerte E1 und E2 in die Steuereinheit SE eingehen, oder auch Soll- und Ist-Fahrtgeschwindigkeit E3 sowie optional die Navigationsinformationen einer Navigationseinheit NE.

Zur Auswertung der Wirtschaftlichkeit des Betriebs des Schiffes kann auch, z.B. täglich einmal um 00.00h, eine automatisierte Berechnung des Verbrauchs an Kraftstoff des vergangenen Tages oder eines anderen vorgegebenen oder einstellbaren Zeitraums erfolgen. Dabei kann der Verbrauch des erfindungsgemäßen Schiffes in Relation zu vergleichbaren Schiffen z.B. mittels in der Steuerung hinterlegter Referenztabellen von Mittelwerten des Kraftstoffverbrauchs dieser Schiffe bewertet werden, um so den durch das erfindungsgemäße Schiff gesparten Kraftstoff für den vergangenen Tag oder auch einen anderen Zeitraum im Vergleich zu herkömmlichen Schiffen vergleichbarer Größe zu erhalten.

Der Gedanke der Erfindung betrifft den Einsatz von Magnus-Rotoren 10 und Propeller 50 bzw. Hauptantrieb HA in einer Kombination, dass der Hauptantrieb HA bei nicht ausreichendem Wind lediglich die Differenz der Leistung erbringen muss, die von den Magnus-Rotoren 10 nicht geliefert werden kann. Es ist vorgesehen, das Schiff grundsätzlich mit den Magnus-Rotoren 10 anzutreiben und den Propeller 50 bzw. den Hauptantrieb HA nur zur Ergänzung bei nicht ausreichenden Windbedingungen zu verwenden. Die Magnus-Rotoren sind dabei derart ausgelegt, dass durch ihren Betrieb die gleiche Leistung (etwa 6000 kW) erreicht wird wie durch den Propeller. Bei ausreichendem Wind kann somit der Antrieb des Schiffes vollständig durch die Magnus-Rotoren 10 erfolgen. Dies wird beispielsweise bei einer Windgeschwindigkeit von 12 bis 14 Metern pro Sekunde erreicht, so dass der Propeller 50 bzw. der Hauptantrieb HA abgeschaltet werden kann, da er für den Vortrieb des Schiffs nicht mehr benötigt wird.

Eine Steuerung des Hauptantriebs HA erfolgt somit derart, dass die Magnus-Rotoren 10 die maximale Leistung oder annähernd die maximale Leistung erzeugen. Eine Steigerung der Leistung der Magnus-Rotoren führt somit unmittelbar zu einer Einsparung an Brennstoff, da für den elektrischen Antrieb durch den Hauptantrieb HA keine zusätzliche Energie erzeugt werden muss. Die Einsparung an Brennstoff ergibt sich somit, ohne dass eine Anpassung zwischen einem durch eine Verbrennungsmaschine angetriebenen Propeller 50 bzw. Hauptantrieb HA sowie der Steuerung der Magnus-Rotoren 10 benötigt wird.

## Patentansprüche

1. Frachtschiff, mit
einer Vielzahl von Magnus-Rotoren (10), wobei jedem der Vielzahl von Magnus-Rotoren (10) ein individuell ansteuerbarer elektrischer Motor (M) zum Drehen des Magnus-Rotors (10) zugeordnet ist, wobei jedem elektrischen Motor (M) ein Umrichter (U) zugeordnet ist, um die Drehzahl und/oder die Drehrichtung des elektrischen Motors (M) zu steuern,
einer zentralen Steuereinheit (SE), die mit den Umrichtern (U) verbunden ist, zum Steuern der einzelnen Umrichter (U), um die Drehzahl und/oder die Drehrichtung der Magnus-Rotoren (10) jeweils unabhängig von den anderen Magnus-Rotoren (10) zu steuern,
einem elektrischen Motor als Hauptantrieb (HA) des Schiffs, wobei dem elektrischen Motor (HA) ein Umrichter (U) zum Steuern des elektrischen Motors (HA) zugeordnet ist,
wobei die Steuereinheit (SE)
in einem ersten Betriebsmodus die Magnus-Rotoren (10) derart ansteuert,
dass ein maximaler Vortrieb erhalten wird, wobei die Differenz aus dem gewünschten Vortrieb und dem durch die Rotation der Magnus-Rotoren (10) erhaltenen Vortrieb durch den elektrischen Motor (HA) erbracht wird
in einem zweiten Betriebsmodus die Magnus-Rotoren (10) ausschaltet und
der gewünschte Vortrieb durch den elektrischen Motor (HA) erbracht wird, und
in einem dritten Betriebsmodus die Magnus-Rotoren (10) derart ansteuert, dass durch die Magnus-Rotoren (10) ein Vortrieb erhalten wird, der geringer ist als der maximale Vortrieb der Magnus-Rotoren (10), wobei die Differenz aus dem gewünschten Vortrieb und dem durch die Rotation der Magnus-Rotoren (10) erhaltenen Vortrieb durch den elektrischen Motor (HA) erbracht wird, und
einem Propeller (50), der einer einstellbaren Pitch-Winkel aufweist und durch den elektrischen Motor (HA) angetrieben wird,
einer Verbrennungskraftmaschine (DA), welche mit einem elektrischen Generator (G1, G2) gekoppelt ist, um elektrische Energie zu erzeugen, und
einer Bedieneinheit (BE) zur Vorgabe des gewünschten Vortriebs,
wobei in dem ersten Betriebsmodus der gewünschte Vortrieb die absolute oder relative Geschwindigkeit des Schiffes ist,
wobei in dem zweiten Betriebsmodus der gewünschte Vortrieb über die Pitch-Steigung des Pitch-Winkel des Propellers (50) einstellbar ist, und
wobei in dem dritten Betriebsmodus der gewünschte Vortrieb die absolute oder relative Leistung des elektrischen Motors (HA) ist.

2. Frachtschiff, nach Anspruch 1,
wobei die Steuereinheit (SE) erhält
eine Windgeschwindigkeit (E1), und/oder
eine Windrichtung (E2), und/oder
ein vorgegebenes Ziel des Schiffes, und/oder
Navigationsinformationen einer Navigationseinheit (NE).

3. Frachtschiff, nach Anspruch 2,
wobei die Steuereinheit (SE) die Drehzahl und/oder die Drehrichtung der Magnus-Rotoren (10) in Abhängigkeit der Windgeschwindigkeit (E1), der Windrichtung (E2), des vorgegebenen Kurses und/oder der Navigationsinformationen der Navigationseinheit (NE) steuert.

4. Frachtschiff, nach Anspruch 3,
wobei die Steuereinheit (SE) zur Bestimmung der Drehzahl und/oder der Drehrichtung der Magnus-Rotoren (10) Kennlinien verwendet, die in der Steuereinheit (SE) vorgesehen sind.

5. Frachtschiff, nach Anspruch 2 bis 4,
wobei die Steuereinheit (SE) in Abhängigkeit der Windgeschwindigkeit (E1), der Windrichtung (E2), des vorgegebenen Ziels und/oder der Navigationsinformationen einen Kurs bestimmt, bei dem der durch die Rotation der Magnus-Rotoren (10) erhaltene Vortrieb maximal ist.

6. Frachtschiff, nach Anspruch 5,
wobei die Steuereinheit (SE) das Schiff so steuert, um den bestimmten Kurs einzunehmen, bei dem der durch die Rotation der Magnus-Rotoren (10) erhaltene Vortrieb maximal ist.

7. Frachtschiff, nach einem der vorangegangenen Ansprüche,
wobei die Steuereinheit (SE) für jeden Betriebsmodus den Verbrauch des Kraftstoffs der Verbrennungskraftmaschine (DA) berechnet, diesen Verbrauch mit dem Verbrauch anderer, hinsichtlich ihrer Größe vergleichbarer Schiffe vergleicht, und den berechneten Verbrauch und das Ergebnis des Vergleichs ausgibt.

8. Frachtschiff, nach einem der vorangegangenen Ansprüche,
wobei eine Vielzahl von Verbrennungskraftmaschinen (DA) vorgesehen ist, die jeweils mit einem elektrischen Generator (G) einer Vielzahl von Generatoren (G) gekoppelt sind, um elektrische Energie zu erzeugen,
wobei die Steuereinheit (SE) zur Erbringung einer geforderten elektrischen Energie so viele Verbrennungskraftmaschinen (DA) der Vielzahl von Verbrennungskraftmaschinen (DA) einschaltet, dass die geforderte elektrische Energie durch die jeweiligen Generatoren (G) mindestens erzeugt wird, und so viele Verbrennungskraftmaschinen (DA) der Vielzahl von Verbrennungskraftmaschinen (DA) ausschaltet, dass der Verbrauch des Kraftstoffs durch die Verbrennungskraftmaschinen (DA) minimiert wird.

9. Verfahren zum Betrieb eines Frachtschiffs, mit einer Vielzahl von Magnus-Rotoren (10), wobei jedem der Vielzahl von Magnus-Rotoren (10) ein individuell ansteuerbarer elektrischer Motor (M) zum Drehen des Magnus-Rotors (10) zugeordnet ist, wobei jedem elektrischen Motor (M) ein Umrichter (U) zugeordnet ist, um die Drehzahl und/oder die Drehrichtung des elektrischen Motors (M) zu steuern, einer zentralen Steuereinheit (SE), die mit den Umrichtern (U) verbunden ist, zum Steuern der einzelnen Umrichter (U), um die Drehzahl und/oder die Drehrichtung der Magnus-Rotoren (10) jeweils unabhängig von den anderen Magnus-Rotoren (10) zu steuern, und einem elektrischen Motor als Hauptantrieb (HA) des Schiffs, wobei dem elektrischen Motor (HA) ein Umrichter (U) zum Steuern des elektrischen Motors (HA) zugeordnet ist, wobei das Verfahren die Schritte aufweist:
in einem ersten Betriebsmodus, Ansteuern der Magnus-Rotoren (10) derart, dass ein maximaler Vortrieb erhalten wird, wobei die Differenz aus dem gewünschten Vortrieb und dem durch die Rotation der Magnus-Rotoren (10) erhaltenen Vortrieb durch den elektrischen Motor (HA) erbracht wird,
in einem zweiten Betriebsmodus, Ausschalten der Magnus-Rotoren (10) und Ansteuern des elektrischen Motors (HA) derart, dass der gewünschte Vortrieb durch den elektrischen Motor (HA) erbracht wird, und
in einem dritten Betriebsmodus die Magnus-Rotoren (10) derart ansteuert, dass durch die Magnus-Rotoren (10) ein Vortrieb erhalten wird, der geringer ist als der maximale Vortrieb der Magnus-Rotoren (10), wobei die Differenz aus dem gewünschten Vortrieb und dem durch die Rotation der Magnus-Rotoren (10) erhaltenen Vortrieb durch den elektrischen Motor (HA) erbracht wird,
wobei das Frachtschiff einen Propeller (50), der durch den elektrischen Motor (HA) angetrieben wird,
eine Verbrennungskraftmaschine (DA), welche mit einem elektrischen Generator (G1, G2) gekoppelt ist, um elektrische Energie zu erzeugen, und
eine Bedieneinheit (BE) zur Vorgabe des gewünschten Vortriebs, aufweist,
wobei in dem ersten Betriebsmodus der gewünschte Vortrieb die absolute oder relative Geschwindigkeit des Schiffes ist,
wobei in dem zweiten Betriebsmodus der gewünschte Vortrieb über die Pitch-Steigung des Pitch-Winkel des Propellers (50) einstellbar ist, und
wobei in dem dritten Betriebsmodus der gewünschte Vortrieb die absolute oder relative Leistung des elektrischen Motors (HA) ist.

## Claims

1. A cargo ship, comprising
a plurality of Magnus rotors (10), wherein an individually actuable electric motor (M) is associated with each of the plurality of Magnus rotors (10) to rotate the Magnus rotor (10), wherein a converter (U) is associated with each electric motor (M) to control the rotary speed and/or the direction of rotation of the electric motor (M),
a central control unit (SE) connected to the converters (U) for controlling the individual converters (U) to control the rotary speed and/or the direction of rotation of the Magnus rotors (10) respectively independently of the other Magnus rotors (10),
an electric motor as the main drive (HA) of the ship, wherein a converter (U) is associated with the electric motor (HA) for controlling the electric motor (HA),
wherein the control unit (SE)
in a first operating mode actuates the Magnus rotors (10) in such a way that a
maximum propulsion is obtained, wherein the difference between the desired propulsion and the propulsion obtained by the rotation of the Magnus rotors (10) is obtained by the electric motor (HA),
in a second operating mode shuts down the Magnus rotors (10) and the desired propulsion is obtained by the electric motor (HA), and
in a third operating mode actuates the Magnus rotors (10) in such a way that
a propulsion is obtained by the Magnus rotors (10), which is less than the maximum
propulsion of the Magnus rotors (10), wherein the difference of the desired propulsion and the propulsion obtained by the rotation of the Magnus rotors (10) is obtained
by the electric motor (HA), and
a propeller (50) which has an adjustable pitch angle and is driven by the electric motor (HA),
an internal combustion engine (DA) coupled to an electric generator (G1, G2) to generate electrical energy, and
an operating unit (BE) for presetting the desired propulsion,
wherein in the first operating mode the desired propulsion is the absolute or relative speed of the ship,
wherein in the second operating mode the desired propulsion is adjustable by way of the pitch inclination of the pitch angle of the propeller (50), and
wherein in the third operating mode the desired propulsion is the absolute or relative power of the electric motor (HA).

2. A cargo ship according to claim 1,
wherein the control unit (SE) receives
a wind speed (E1), and/or
a wind direction (E2), and/or
a predetermined destination of the ship, and/or
navigation information from a navigation unit (NE).

3. A cargo ship according to claim 2,
wherein the control unit (SE) controls the rotary speed and/or the direction of rotation of the Magnus rotors (10) in dependence on the wind speed (E1), the wind direction (E2), the predetermined course and/or navigation information of the navigation unit (NE).

4. A cargo ship according to claim 3,
wherein the control unit (SE) uses characteristic curves provided in the control unit (SE) for determining the rotary speed and/or the direction of rotation of the Magnus rotors (10).

5. A cargo ship according to claims 2 to 4,
wherein the control unit (SE) determines a course in respect of which the propulsion obtained by the rotation of the Magnus rotors (10) is maximum, in dependence on the wind speed (E1), the wind direction (E2), the predetermined destination and/or the navigation information.

6. A cargo ship according to claim 5,
wherein the control unit (SE) controls the ship in such a way as to assume the given course in respect of which the propulsion obtained by the rotation of the Magnus rotors (10) is maximum.

7. A cargo ship according to one of the preceding claims,
wherein for each operating mode the control unit (SE) calculates the consumption of the fuel of the internal combustion engine (DA), compares said consumption to the consumption of other ships which are comparable in respect of size, and outputs the calculated consumption and the result of the comparison.

8. A cargo ship according to one of the preceding claims,
wherein there is provided a plurality of internal combustion engines (DA) which are respectively coupled to an electric generator (G) of a plurality of generators (G) to generate electrical energy,
wherein to produce a required electrical energy the control unit (SE) switches on so many internal combustion engines (DA) of the plurality of internal combustion engines (DA) that the required electrical energy is at least generated by the respective generators (G) and shuts down so many internal combustion engines (DA) of the plurality of internal combustion engines (DA) that the consumption of fuel by the internal combustion engines (DA) is minimised.

9. A method of operating a cargo ship, comprising a plurality of Magnus rotors (10), wherein an individually actuable electric motor (M) is associated with each of the plurality of Magnus rotors (10) to rotate the Magnus rotors (10), wherein a converter (U) is associated with each electric motor (M) to control the rotary speed and/or the direction of rotation of the electric motor (M), a central control unit (SE) connected to the converters (U) for controlling the individual converters (U) to control the rotary speed and/or the direction of rotation of the Magnus rotors (10) respectively independently of the other Magnus rotors (10), and an electric motor as the main drive (HA) of the ship, wherein a converter (U) is associated with the electric motor (HA) for controlling the electric motor (HA), wherein the method has the following steps:
in a first operating mode actuating the Magnus rotors (10) in such a way that a maximum propulsion is obtained, wherein the difference between the desired propulsion and the propulsion obtained by the rotation of the Magnus rotors (10) is obtained by the electric motor (HA),
in a second operating mode shutting down the Magnus rotors (10) and actuating the electric motor (HA) in such a way that the desired propulsion is obtained by the electric motor (HA), and
in a third operating mode actuates the Magnus rotors (10) in such a way that a propulsion is obtained by the Magnus rotors (10), which is less than the maximum propulsion of the Magnus rotors (10), wherein the difference of the desired propulsion and the propulsion obtained by the rotation of the Magnus rotors (10) is obtained by the electric motor (HA),
wherein the cargo ship has a propeller (50) which is driven by the electric motor (HA),
an internal combustion engine (DA) coupled to an electric generator (G1, G2) to generate electrical energy, and
an operating unit (BE) for presetting the desired propulsion,
wherein in the first operating mode the desired propulsion is the absolute or relative speed of the ship,
wherein in the second operating mode the desired propulsion is adjustable by way of the pitch inclination of the pitch angle of the propeller (50), and
wherein in the third operating mode the desired propulsion is the absolute or relative power of the electric motor (HA).

## Revendications

1. Navire de charge, avec
une pluralité de rotors à effet Magnus (10), dans lequel un moteur électrique (M) commandable individuellement est associé à chacun de la pluralité de rotors à effet Magnus (10) pour la rotation du rotor à effet Magnus (10), dans lequel un convertisseur (U) est associé à chaque moteur électrique (M) afin de commander la vitesse de rotation et/ou le sens de rotation du moteur électrique (M),
une unité de commande centrale (SE) qui est raccordée aux convertisseurs (U) pour la commande des convertisseurs individuels (U) afin de commander la vitesse de rotation et/ou le sens de rotation des rotors à effet Magnus (10) respectivement indépendamment des autres rotors à effet Magnus (10),
un moteur électrique en tant qu'entraînement principal (HA) du navire, dans lequel un convertisseur (U) est associé au moteur électrique (HA) pour la commande du moteur électrique (HA),
dans lequel l'unité de commande (SE)
commande dans un premier mode de fonctionnement les rotors à effet Magnus (10) de telle manière qu'une propulsion maximale soit obtenue, dans lequel la différence entre la propulsion souhaitée et la propulsion obtenue par la rotation des rotors à effet Magnus (10) est fournie par le moteur électrique (HA),
éteint dans un deuxième mode de fonctionnement les rotors à effet Magnus (10) et la propulsion souhaitée est fournie par le moteur électrique (HA), et
commande dans un troisième mode de fonctionnement les rotors à effet Magnus (10) de telle manière qu'une propulsion soit obtenue par les rotors à effet Magnus (10), laquelle est plus faible que la propulsion maximale des rotors à effet Magnus (10), dans lequel la différence entre la propulsion souhaitée et la propulsion obtenue par la rotation des rotors à effet Magnus (10) est fournie par le moteur électrique (HA), et
une hélice (50) qui présente un angle de calage réglable et est entraînée par le moteur électrique (HA),
un moteur à combustion interne (DA) qui est couplé à un générateur électrique (G1, G2) afin de générer de l'énergie électrique, et
une unité de commande (BE) pour la prescription de la propulsion souhaitée,
dans lequel dans le premier mode de fonctionnement la propulsion souhaitée est la vitesse absolue ou relative du navire,
dans lequel dans le deuxième mode de fonctionnement la propulsion souhaitée est réglable par le biais du pas de calage de l'angle de calage de l'hélice (50), et
dans lequel dans le troisième mode de fonctionnement la propulsion souhaitée est la puissance absolue ou relative du moteur électrique (HA).

2. Navire de charge selon la revendication 1,
dans lequel l'unité de commande (SE) obtient
une vitesse du vent (E1), et/ou
un sens du vent (E2), et/ou
une cible prescrite du navire, et/ou
des informations de navigation d'une unité de navigation (NE).

3. Navire de charge selon la revendication 2,
dans lequel l'unité de commande (SE) commande la vitesse de rotation et/ou le sens de rotation des rotors à effet Magnus (10) en fonction de la vitesse du vent (E1), du sens du vent (E2), du cours prescrit et/ou des informations de navigation de l'unité de navigation (NE).

4. Navire de charge selon la revendication 3,
dans lequel l'unité de commande (SE) utilise, pour la détermination de la vitesse de rotation et/ou du sens de rotation des rotors à effet Magnus (10), des courbes caractéristiques qui sont prévues dans l'unité de commande (SE).

5. Navire de charge selon la revendication 2 à 4,
dans lequel l'unité de commande (SE) détermine, en fonction de la vitesse du vent (E1), du sens du vent (E2), de la cible prescrite et/ou des informations de navigation, un cours pour lequel la propulsion obtenue par la rotation des rotors à effet Magnus (10) est maximale.

6. Navire de charge selon la revendication 5,
dans lequel l'unité de commande (SE) commande le navire de sorte à occuper le cours déterminé pour lequel la propulsion obtenue par la rotation des rotors à effet Magnus (10) est maximale.

7. Navire de charge selon l'une quelconque des revendications précédentes,
dans lequel l'unité de commande (SE) calcule, pour chaque mode de fonctionnement, la consommation du carburant du moteur à combustion interne (DA), compare cette consommation avec la consommation d'autres navires comparables en ce qui concerne leur grandeur, et émet la consommation calculée et le résultat de la comparaison.

8. Navire de charge selon l'une quelconque des revendications précédentes,
dans lequel une pluralité de moteurs à combustion interne (DA) est prévue, lesquels sont couplés respectivement avec un générateur électrique (G) d'une pluralité de générateurs (G) afin de générer de l'énergie électrique,
dans lequel l'unité de commande (SE) allume pour la fourniture d'une énergie électrique exigée de si nombreux moteurs à combustion interne (DA) de la pluralité de moteurs à combustion interne (DA) que l'énergie électrique exigée est au moins générée par les générateurs respectifs (G), et éteint de si nombreux moteurs à combustion interne (DA) de la pluralité de moteurs à combustion interne (DA) que la consommation du carburant est minimisée par les moteurs à combustion interne (DA).

9. Procédé de fonctionnement d'un navire de charge, avec une pluralité de rotors à effet Magnus (10), dans lequel un moteur électrique (M) commandable individuellement est associé à chacun de la pluralité de rotors Magnus (10) pour la rotation du rotor à effet Magnus (10), dans lequel un convertisseur (U) est associé à chaque moteur électrique (M) afin de commander la vitesse de rotation et/ou le sens de rotation du moteur électrique (M), une unité de commande centrale (SE) qui est raccordée aux convertisseurs (U) pour la commande des convertisseurs individuels (U) afin de commander la vitesse de rotation et/ou le sens de rotation des rotors à effet Magnus (10) respectivement indépendamment des autres rotors à effet Magnus (10), et un moteur électrique en tant qu'entraînement principal (HA) du navire, dans lequel un convertisseur (U) est associé au moteur électrique (HA) pour la commande du moteur électrique (HA), dans lequel le procédé présente les étapes :
dans un premier mode de fonctionnement, la commande des rotors à effet Magnus (10) de telle manière qu'une propulsion maximale soit obtenue, dans lequel la différence entre la propulsion souhaitée et la propulsion obtenue par la rotation des rotors à effet Magnus (10) soit fournie par le moteur électrique (HA),
dans un deuxième mode de fonctionnement, l'arrêt des rotors à effet Magnus (10) et la commande du moteur électrique (HA) de telle manière que la propulsion souhaitée soit fournie par le moteur électrique (HA), et
dans un troisième mode de fonctionnement commande les rotors à effet Magnus (10) de telle manière qu'une propulsion soit obtenue par les rotors à effet Magnus (10), laquelle est plus faible que la propulsion maximale des rotors à effet Magnus (10), dans lequel la différence entre la propulsion souhaitée et la propulsion obtenue par la rotation des rotors à effet Magnus (10) est fournie par le moteur électrique (HA),
dans lequel le navire de charge présente une hélice (50) qui est entraînée par le moteur électrique (HA),
un moteur à combustion interne (DA) qui est couplé à un générateur électrique (G1, G2) afin de générer de l'énergie électrique, et
une unité de commande (BE) pour la prescription de la propulsion souhaitée,
dans lequel, dans le premier mode de fonctionnement, la propulsion souhaitée est la vitesse absolue ou relative du navire,
dans lequel, dans le deuxième mode de fonctionnement, la propulsion souhaitée est réglable par le biais du pas de calage de l'angle de calage de l'hélice (50), et
dans lequel, dans le troisième mode de fonctionnement, la propulsion souhaitée est la puissance absolue ou relative du moteur électrique (HA).
